Europäisches Patentamt

European Patent Office

Office européen des brevets

(19)

(11) Numéro de publication: **0 015 806**
**A1**

(12) # DEMANDE DE BREVET EUROPEEN

(21) Numéro de dépôt: 80400236.8

(22) Date de dépôt: **19.02.80**

(51) Int. Cl.³: **H 02 G 1/00,** G 02 B 5/16

(30) Priorité: **05.03.79 FR 7905584**

(43) Date de publication de la demande: **17.09.80**
**Bulletin 80/19**

(84) Etats contractants désignés: **DE GB NL**

(71) Demandeur: **Société Anonyme LIGNES TELEGRAPHIQUES ET TELEPHONIQUES, 1 Rue Charles Bourseul, F-78702 - Conflans-Ste Honorine (FR)**

(72) Inventeur: **Chiron, Bernard, THOMSON-CSF - SCPI 173 Boulevard Haussmann, F-75360 Paris Cedex 08 (FR)**
Inventeur: **Payant, André, THOMSON-CSF - SCPI 173 Boulevard Haussmann, F-75360 Paris Cedex 08 (FR)**
Inventeur: **de Vecchis, Michel, THOMSON-CSF - SCPI 173 Boulevard Haussmann, F-75360 Paris Cedex 08 (FR)**

(74) Mandataire: **Guilguet, Philippe et al, "THOMSON-CSF" - SCPI 173, bld Haussmann, F-75360 Paris Cedex 08 (FR)**

(54) Perfectionnements aux unités de réparation pour système de transmission sur câble et procédé de raccordement.

(57) Réaliser une unité de réparation pour système de transmission sur câble en cas de détérioration du câble de ligne.

Une lingueur de câble à fibre optique égale à la distance entre deux stations d'amplification est associée à des unités de raccordement assurant le traitement des signaux électriques et leur conversion en signaux optiques et réciproquement; le nombre de fibres du câble est égal au nombre de paires à rétablir.

Télécommunications sur câbles de transmission.

EP 0 015 806 A1

ACTORUM AG

1

PERFECTIONNEMENTS AUX UNITES DE REPARATION POUR SYSTEME
DE TRANSMISSION SUR CABLE ET PROCEDE DE RACCORDEMENT

La présente invention concerne une structure d'unité de réparation pour système de transmission sur câble de télécommunication. Il est bien connu que la durée de l'interruption des liaisons résultant de la détérioration d'un câble doit être réduite au strict minimum. Actuellement, le rétablissement de la liaison, même provisoire, exige un ensemble d'opérations qui peut être résumé de la façon suivante :

1°) localisation de la section de câble défectueuse,

2°) envoi de l'équipe de réparation sur place,

3°) réparation proprement dite : mise en place du câble de réparation,

4°) remise en état du câble défectueux, et

5°) déconnexion du câble de réparation.

La localisation du défaut est effectuée par le personnel des stations principales d'extrémité suivant une technique mise au point par le service d'exploitation du système de transmission. Le déplacement de l'équipe résulte d'un plan prévu à l'avance. Ces deux opérations sont programmées et la durée totale nécessitée ne relève pas de données techniques ; elle est souvent relativement faible devant celle des autres étapes. La présente invention a pour objet de réduire la durée des deuxième et troisième étapes dont les principales opérations doivent être rappelées ici.

L'équipe de réparation procède le plus souvent à l'installation d'un câble de réparation entre les deux stations d'amplification encadrant le défaut. Cette opération est complexe et nécessite les opérations suivantes :

- acheminement sur le lieu de la réparation du nombre de longueurs de câble de réparation nécessaire ;

- déroulage des longueurs de câble ;

- raccordement de ces longueurs entre elles ;

- préparation de l'accès au câble (localisation des épissures et accès proprement dit) ;

- raccordement du câble de réparation aux cordons souples des stations d'amplification. La durée de cette opération dépend du type de câble considéré puisque les longueurs disponibles dépendent du type de câble et varient entre 500 mètres pour un câble de petite contenance et 250 mètres au moins pour un câble plus important.

La présente invention a essentiellement pour objet une unité de réparation permettant de supprimer le problème de l'accès au câble et de réduire de la moitié la durée de l'opération de mise en place tout en facilitant la réparation d'un câble à grand nombre de paires coaxiales.

L'unité de réparation selon la présente invention est essentiellement constituée par les éléments suivants:

- un cordon d'entrée terminé à l'une de ses extrémités par un connecteur d'entrée et relié à son autre extrémité à un coffret de raccordement comportant essentiellement un ensemble modulateur-démodulateur optique, un amplificateur et un moyen de connexion de câble à fibres optiques ;

- une longueur unique de câble à fibres optiques ayant la longueur de la section d'amplification montée et comportant au plus autant de fibres optiques qu'il y a de paires dans le câble défectueux (un rétablissement provisoire d'une fraction du trafic peut être acceptable dans certains systèmes) ;

- un cordon de sortie terminé à l'une de ses extrémités par un connecteur de sortie et relié à son autre extrémité à un coffret de raccordement comportant essentiel-

3

lement un ensemble modulateur-démodulateur optique, un amplificateur et un moyen de connexion de câble à fibres optiques.

Il existe actuellement des câbles à fibres optiques renfermant une centaine de fibres. Lorsque l'artère en panne est d'une capacité supérieure et qu'un plus grand nombre de liaisons doit être établi, plusieurs unités de réparation seront utilisées.

L'avantage essentiel de l'utilisation d'un câble utilisant des fibres optiques à la réparation d'un câble téléphonique réside en ce que, quelle que soit la section d'amplification du système considéré, il est possible de disposer d'une seule longueur pour couvrir la distance entre deux répéteurs adjacents. Les opérations de raccordement entre longueurs sont donc supprimées. De même, le déroulage devient une opération simple et rapide grâce à la diminution de dimensions et de poids du câble de réparation. Pour fixer les idées, on peut enrouler sur un seul touret d'un diamètre de 750 millimètres, deux kilomètres de câble à huit fibres optiques, le touret chargé ne pesant que 120 kilogrammes.

Conformément à la présente invention, il est prévu de connecter l'unité de réparation entre les sorties des deux stations amplificatrices encadrant le lieu de défaut du câble. L'utilisation d'un câble de réparation de la longueur de la section d'amplification supprime le problème de l'accès au câble ; en effet, aux stations d'amplification, l'accès est pratiquement immédiat puisqu'il suffit d'ouvrir la chambre ou la boite abritant les amplificateurs. Ce mode de raccordement a pour avantage la suppression du problème de préaccentuation des signaux à transmettre, la transmission sur fibre optique étant non dispersive dans la bande des systèmes multiplexes actuellement installés même de rang le plus élevé.

4

Selon une variante préférée, le coffret de raccordement est disposé à l'intérieur d'un boitier conçu de façon à se substituer au couvercle des cuves ou boites d'amplificateur utilisés dans les stations d'amplification de l'artère à dépanner. De cette façon, le raccordement se limite à la jonction en cordons souples des coffrets de raccordement avec les amplificateurs, le raccordement du câble de réparation avec le coffret ayant été fait en usine.

L'invention sera bien comprise en se reportant à la description suivante et aux figures qui l'accompagnent données à titre d'exemple non limitatif, et dans lesquelles :

- les figures 1 et 2 représentent des unités de réparation ;

- la figure 3 représente le schéma électrique simplifié d'une station d'amplification d'un système de transmission analogique normalement connecté au câble ;

- la figure 4 représente le même schéma quand la station d'amplification est connectée au câble normal d'une part et au câble de réparation selon l'invention d'autre part ;

- les figures $5_A$ et $5_B$ représentent respectivement vue de côté, vue de dessous avec coupe partielle de la trappe, une station en cuve ;

- la figure $5_C$ est une vue à plus grande échelle du couvercle de la cuve ;

- la figure $6_A$ est une vue en coupe d'une chambre d'amplification ;

- la figure $6_B$ est la même vue lorsque le câble de réparation est en place.

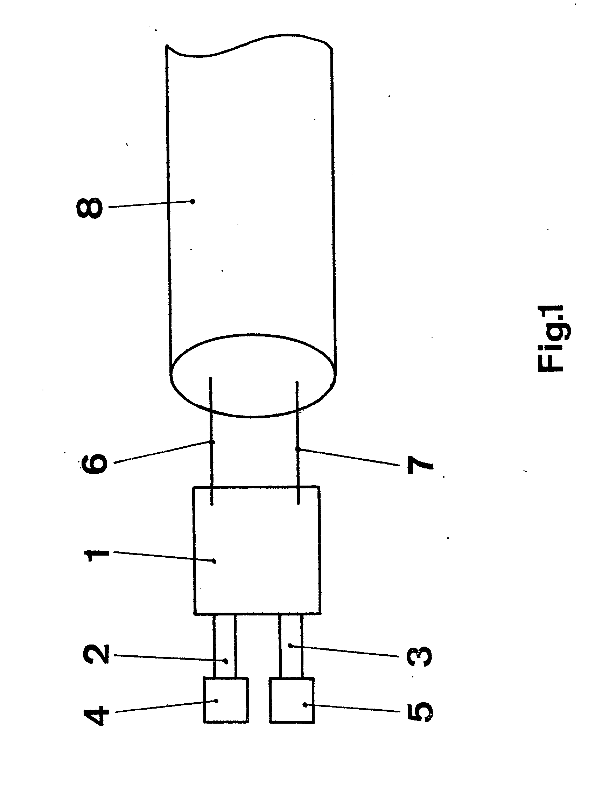

L'on a choisi, en vue d'illustrer l'utilisation de l'unité de réparation selon l'invention, son application au système de transmission analogique à 12,5 MHz sur paires coaxiales 1,2/4,4 mm. Dans un tel système, le pas d'amplification nominal est de 1982 mètres, la section la plus longue ne dépassant pas 2082 mètres. Le niveau du signal au point d'interconnexion est fixé, en application de l'avis G 332 du CCITT, à - 13 dBr à 12,435 MHz. Les câbles les plus généralement utilisés dans ce système sont des câbles à huit paires coaxiales. Le câble de réparation comporte le même nombre de fibres optiques. Pour simplifier la figure 1, on a limité la représentation à deux fibres optiques c'est-à-dire à deux paires coaxiales, étant entendu que les autres paires du câble sont traitées de la même façon. L'unité de réparation comprend les éléments suivants :

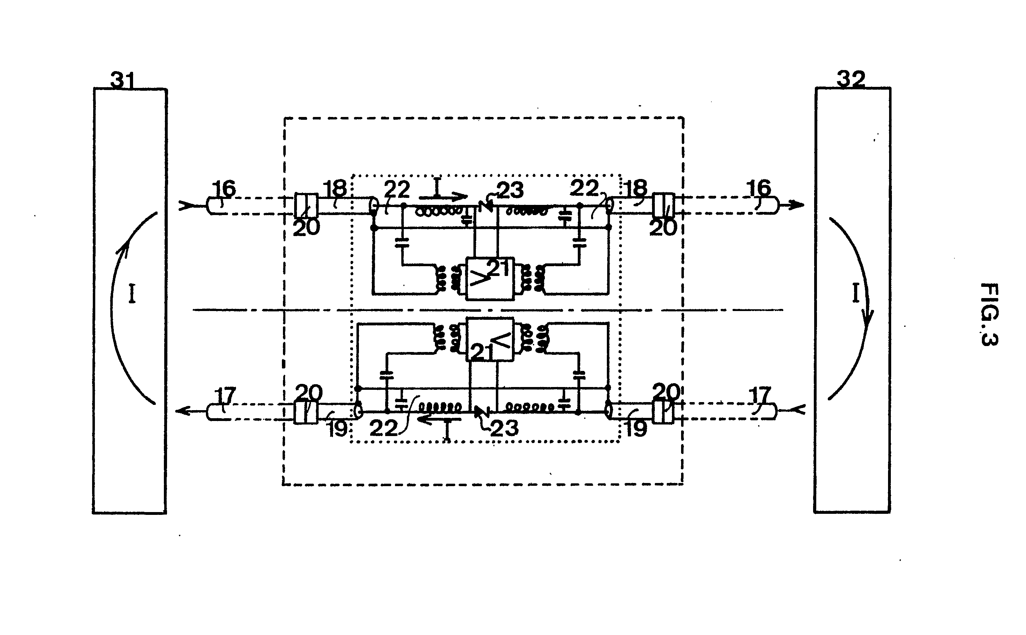

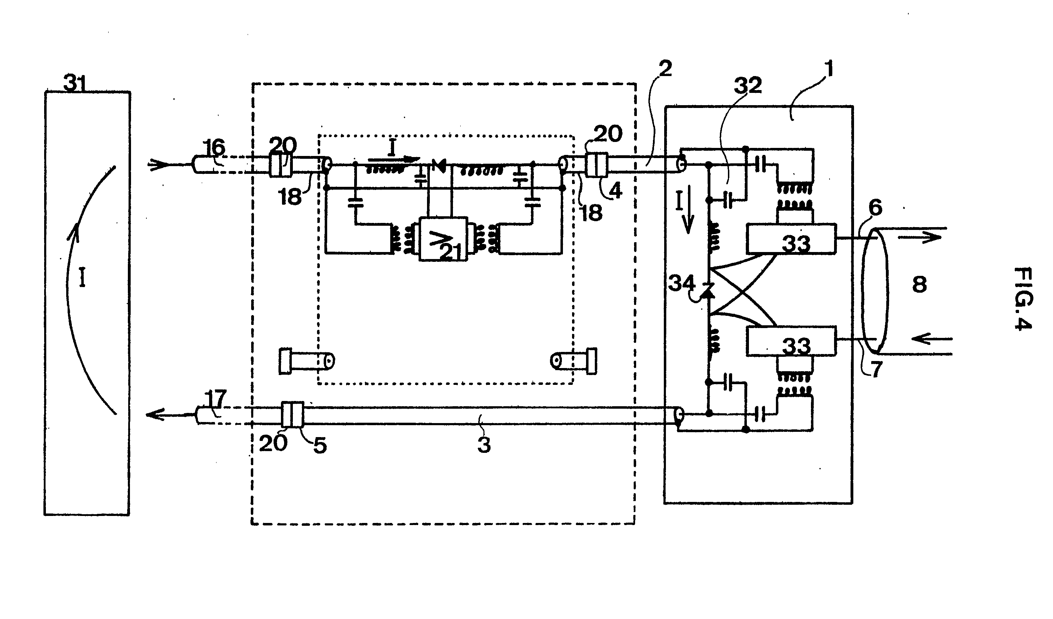

- une unité de raccordement 1 terminée par deux sections coaxiales d'entrée respectivement 2 et 3 constituées par des paires coaxiales de même type que celles du câble à réparer, terminées par des connecteurs d'entrée, respectivement 4 et 5, permettant le raccordement aux connecteurs des cordons de sortie appartenant à l'amplificateur. Le coffret de raccordement alimente directement deux fibres optiques, respectivement 6 et 7, appartenant au câble 8 servant à la réparation. L'autre extrémité du câble 8 est associée à une unité de raccordement analogue à l'unité 1 permettant, par l'intermédiaire de câbles coaxiaux analogues à 2 et 3, le raccordement aux cordons de sortie de la station amplificatrice suivante. La continuité électrique du circuit de téléalimentation est assurée dans chaque cas suivant le type de téléalimentation utilisé. On a représenté sur les figures 3 et 4, en détail, les circuits d'interconnexion utilisés dans le cas d'une liaison à 12,5 MHz.

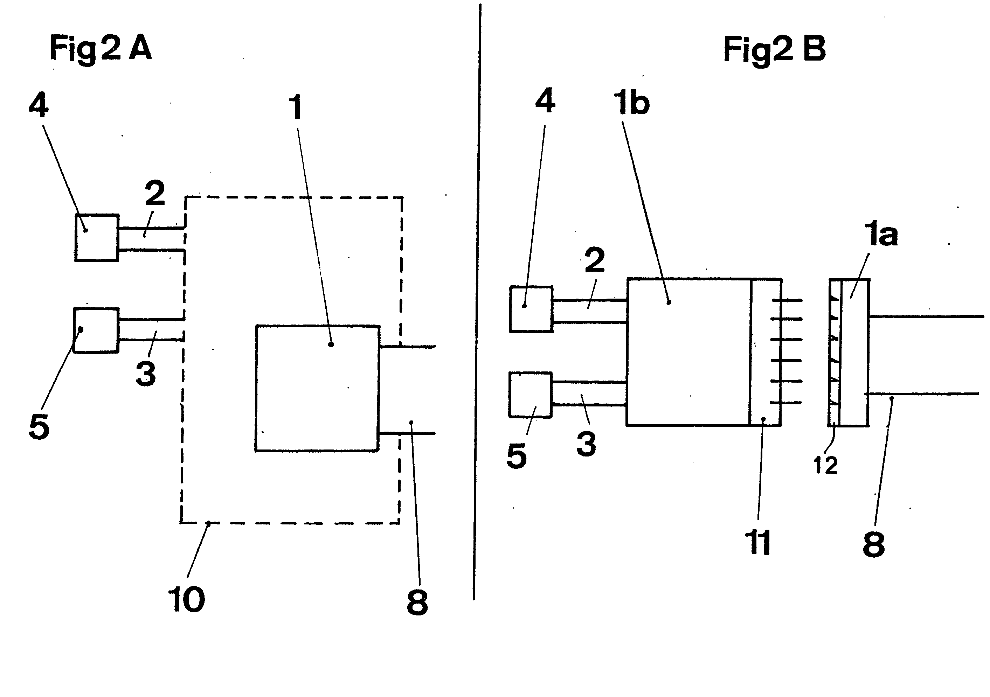

La figure 2 représente deux variantes de réalisation de l'unité de réparation selon l'invention. Sur la première variante (figure $2_A$), l'unité de raccordement 1 est disposée à l'intérieur d'une tête de câble 10 montée en usine, terminée par autant de connecteurs 4 - 5 ..., que le câble à réparer comporte de paires coaxiales, connectés à des tronçons 2 de paire identique. L'autre extrémité du câble 8 comporte une tête identique. L'unité 1 comprend l'ensemble des circuits de traitement du signal électrique et l'organe de transformation opto-électronique effectuant la transformation signal électrique - signal optique et inversement ainsi que leurs alimentations. Ces circuits sont explicités plus loin.

Dans la variante de la figure $2_B$ , l'unité de raccordement est scindée en deux parties schématisées respectivement en 1a et 1b séparées par un connecteur multibroches 11 (la figure représente six broches) comportant autant de broches qu'il y a de paire coaxiale à remplacer par une fibre optique du câble de réparation 8. L'ensemble 1b figure les circuits de traitement du signal, notamment les amplificateurs, et leur alimentation. Il est terminé par les sections de paire coaxiale 2 - 3 de même type que celles du câble de ligne terminées par les connecteurs 4 et 5 qui seront associés à ceux de la station d'amplification. Le câble de réparation à fibre optique 8 est associé avec la partie 1a de l'inité de raccordement, limitée à l'organe de conversion optoélectronique (et réciproquement) terminée par le connecteur multibroche 12 coopérant avec 11. L'autre extrémité du câble 8 est terminée d'une façon identique. La réalisation de l'unité de réparation sous la forme schématisée sur la figure $2_B$ facilite la mise sur touret du câble, en séparant la partie encombrante de l'unité de raccordement du câble 8. La constitution de l'unité de réparation est assurée par enfichage à chacune des extrémités du câble d'une unité de raccordement telle que schématisée sur la figure $2_B$.

De préférence, le câble 8 présente la structure décrite dans la demande de brevet européen n° 0 004 486 déposée par la Demanderesse le 12 Février 1979 pour "Eléments de câble à fibres optiques et câbles les incorporant". Une telle structure comporte essentiellement un support diélectrique cylindrique portant des
rainures hélicoïdales servant de logement aux fibres
optiques.

La figure 3 représente le circuit électrique de raccordement assurant la continuité de la téléalimentation
et l'alimentation de l'amplificateur d'une station. On a
représenté respectivement en 16 et 17 deux paires coaxiales du câble à réparer. Ces paires coaxiales sont associées à un répéteur par l'intermédiaire des cordons 18 -
19, le raccordement étant figuré en 20. On a représenté
en 21 l'amplificateur recevant les signaux téléphoniques
par l'intermédiaire du filtre d'aiguillage 22. Après amplification, les signaux sont réinjectés dans la paire
coaxiale de sortie 16 par l'intermédiaire du cordon 18
raccordé en 20. L'énergie d'alimentation de l'amplificateur 21 est obtenue à l'aide de l'élément de redressement
23 symbolisé par une diode Zener associée au filtre d'aiguillage 22. Ainsi qu'il est bien connu, l'ensemble des
circuits qui vient d'être énuméré est associé à chacune
des paires coaxiales du câble et identique quel que soit
le sens de transmission sur ces paires. La continuité
électrique des circuits de téléalimentation est assurée
ainsi qu'il est représenté d'une façon schématique aux
stations d'alimentation 31 et 32. Il est à noter que pour
des raisons de sécurité l'énergie fournie par chacune des
stations d'alimentation est suffisante pour alimenter la
totalité de la liaison. Dans l'exemple choisi à titre
d'illustration, cette alimentation se fait à courant
constant (70 milliampères). La figure 4 reprend la même
représentation que celle de la figure 3 dans le cas où le
câble de réparation est connecté à l'extrémité de la station d'amplification considérée. Il est prévu que chaque
paire coaxiale correspond à une fibre optique du câble
de réparation. Ainsi qu'on l'a dit, l'unité de réparation

8

est connectée entre les sorties de deux stations adjacentes d'amplification. En ce qui concerne les signaux téléphoniques transmis dans le sens indiqué par la flèche sur la paire coaxiale 16, ils sont normalement amplifiés dans la station par l'amplificateur 21 et disponibles, au niveau normalisé, à la sortie sur le cordon 18 terminé par le connecteur 20. Ce connecteur 20 est associé au connecteur 4 terminant le cordon 2 associé au coffret de raccordement 1 de l'unité de réparation. Le coffret de raccordement comporte un filtre d'aiguillage 32 destiné à isoler le signal téléphonique et à l'appliquer à un transformateur électro-optique 33. L'énergie d'alimentation du transformateur 33 est fournie par l'alimentation symbolisée par la diode Zener 34. Le circuit d'alimentation d'énergie se referme à travers le conducteur central du tronçon de paire coaxiale 3 terminant le coffret de raccordement et terminé par le connecteur 5 (cf. figure 1) assurant le raccordement avec le connecteur 20 disposé à l'extrémité de la paire coaxiale de retour du câble de ligne 17.

Le transformateur 33 peut être constitué, selon une variante préférée de l'invention, par l'un des éléments d'une matrice du type décrit dans la demande de brevet européen n° 0 004 800 déposée par la Demanderesse le 15 Février 1979, pour : "Convertisseur optoélectronique pour extrémité de câble à fibres optiques". A défaut, la transformation peut être effectuée à l'aide d'un ensemble constitué par une diode photo-émissive du type HR 953 vendu par la Société Plessey et d'une photodiode pin de réception du type HP 5082-4205 vendu par la Société Hewlett-Packard.

Le bilan électrique de l'unité de raccordement s'établit comme suit : les fibres optiques apportent une atténuation constante dans la bande transmise de

9

5 dB par kilomètre ce qui, pour la longueur considérée, introduit une atténuation d'environ 10 dB. Si l'on considère comme origine des niveaux la puissance optique émise par la diode, on sait que le niveau d'énergie recueilli à moindre frais par la fibre est de l'ordre de - 15 dB. L'atténuation apportée par la fibre optique sur 2 kilomètres est d'environ 10 dB. L'atténuation due à la transformation inverse (opto-électrique) doit être ajoutée à l'atténuation de 25 dB ci-dessus. L'expérience a montré que un gain de l'amplificateur de réception de 65 dB permet de compenser l'ensemble des pertes de transmission optique et de conversion des deux transformations. La consommation de cet amplificateur peut être évaluée à 50 mW et celle des transducteurs, respectivement à 1,5 et 1 watt. Il est possible d'obtenir cette énergie à partir de la téléalimentation. L'utilisation de matrices opto-électroniques du type mentionné plus haut disposées dans un boitier rempli de matériau optique permet d'obtenir un découplage entre voies supérieur à 80 dB pour la transmission optique, ce qui est largement compatible avec les spécifications CCITT.

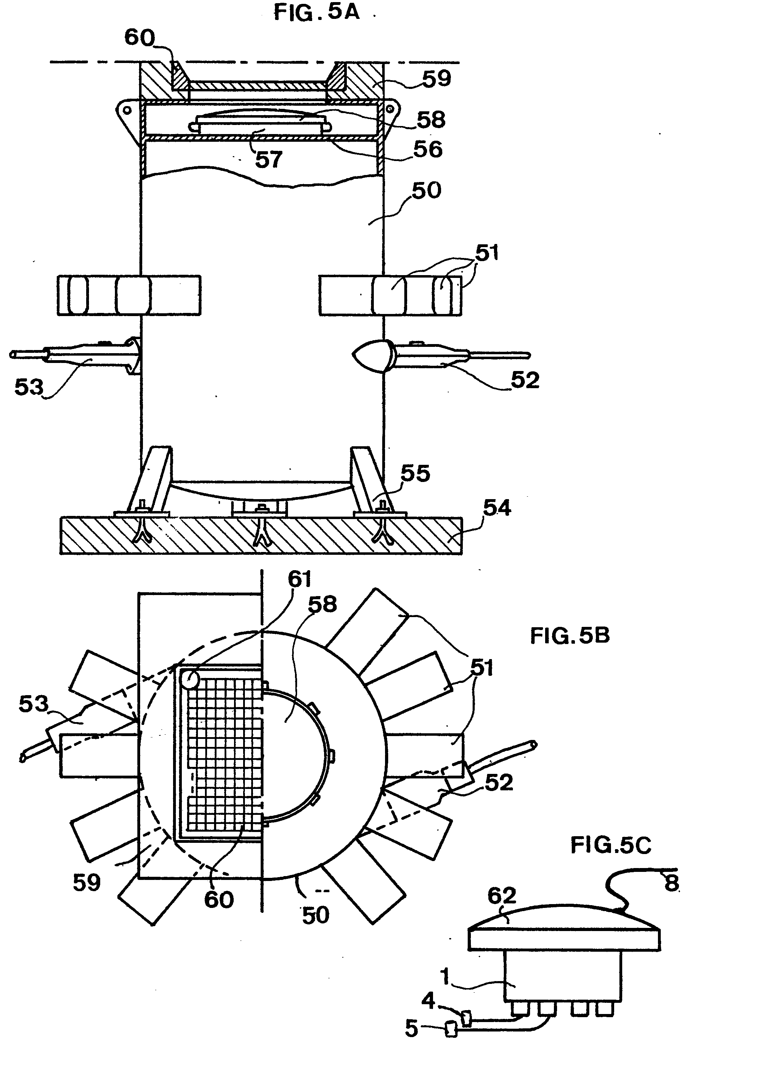

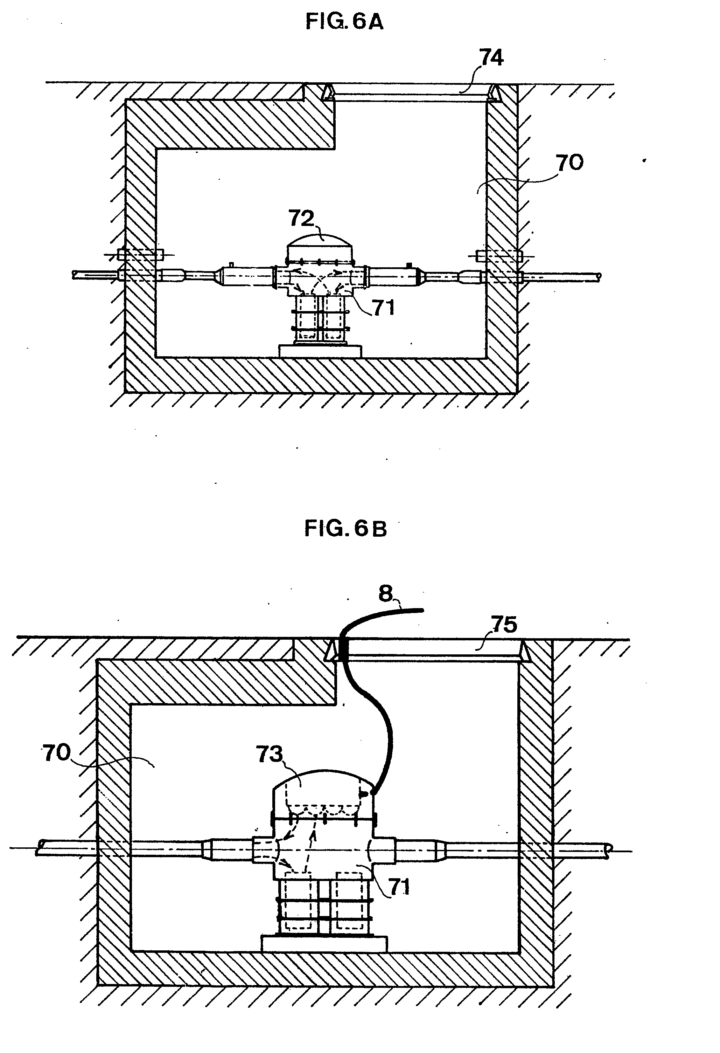

Les figures 5 et 6 représentent des variantes préférées de réalisation de l'invention dans lesquelles le câble de raccordement est terminé à ses deux extrémités par des coffrets de raccordement cf. figure 2$_A$ disposés dans des boitiers qui peuvent se substituer aux couvercles des récipients contenant les répéteurs.

La figure 5 correspond à une liaison dans laquelle les répéteurs sont contenus dans des cuves 50 du type décrit dans le brevet français n° 2 148 842 dans lesquelles les amplificateurs sont contenus dans des alvéoles radiales 51 d'une cuve de forme générale cylindrique pour favoriser l'équilibre thermique de l'ensemble. On voit en 52 et 53 les arrivées et départs du câble de ligne. La cuve repose sur une dalle de béton 54 par des pieds 55 qui sont solidaires de 54. La partie supérieure 56 de la cuve est normalement occupée par un dôme 57 fermé par un couvercle amovible 58 muni d'un joint étanche. Un chassis 59 prolonge la cuve vers le haut ; une plaque de fonte amovible 60 referme, au niveau du sol, la cavité dans laquelle est introduite la cuve.

Selon la présente invention, il est prévu de substituer à la plaque 60, une plaque de mêmes dimensions dans laquelle est ménagée une ouverture 61 occupée par le câble de réparation 8 et au couvercle 58, une structure mécanique interchangeable 62 portant les coffrets de raccordement 1 contenant le dispositif de conversion et d'adaptation de l'unité de réparation selon l'invention, avec les connecteurs 4, 5 des cordons et le câble à fibre optique 8 de dépannage.

La figure $6_A$ représente une station d'amplification placée dans une chambre 70 fermée par une plaque 74 et contenue dans une boite 71 fermée à sa partie supérieure par un couvercle 72 muni d'un joint d'étanchéité dans le cas du raccordement au câble de ligne. La figure $6_B$ représente le même amplificateur raccordé à l'unité de réparation selon l'invention. La plaque 75 laisse passer le câble 8 à travers une ouverture étanche. Un couvercle 73 contenant les coffrets de raccordement 1 a été substitué au couvercle 72. Les connexions assurées par les cordons souples sont représentées en pointillé.

L'installation du câble de réparation est effectuée comme suit. Dans l'exemple ci-dessus, on utilise un câble à fibres optiques à huit fibres du type décrit dans la demande de brevet européen n° 0 004 486 déposée par la Demanderesse le 12 Février 1979 pour : "Eléments de câble à fibres optiques et câbles les incorporant". Un tel câble est essentiellement constitué d'un support rainuré comportant des fibres optiques disposées à l'intérieur des rainures et maintenues dans celles-ci par des lèvres obstruant au moins partiellement les rainures à la périphérie du support cylindrique, un rubanage diélectrique autour du support et des protections mécaniques constituées par une gaîne en aluminium sur laquelle est extrudée une gaîne en polyéthylène haute densité. Un tel câble est réalisé par la Société LIGNES TELEGRAPHIQUES ET TELEPHONIQUES. Le diamètre du câble est de l'ordre de 9 mm et le poids d'une longueur de câble de 2,2 kilomètres associée au coffret de raccordement est de l'ordre de 120 kilogrammes. La longueur peut être conditionnée sur un touret de largeur utile de 350 mm ayant un diamètre de joue de 750 mm. Les opérations de raccordement du câble de réparation, dans le cas de la variante de la figure 5, sont les suivantes :

- déroulage du câble de réparation à fibre optique
- connexion du câble au boitier de raccordement
- connexion aux répéteurs des cordons du boitier de raccordement.

12

## REVENDICATIONS

1- Unité de réparation pour système de transmission sur câble comportant les éléments suivants :

- un premier ensemble de cordons d'entrée de nature analogue à celle des éléments du câble en défaut terminés à l'une de leurs extrémités par un connecteur d'entrée et connectées à l'autre à un coffret de raccordement ;

- une première unité de raccordement comportant un ensemble de même nombre de circuits électroniques de traitement du signal, d'éléments opto-électroniques de transformation associés et terminés par un moyen de connexion pour fibres optiques et d'alimentations associées;

- une longueur unique de câble à fibres optiques égale à la section d'amplification du système de transmission et ayant au plus un nombre de fibres égal à celui des éléments du câble terminée à ses deux extrémités par des moyens de connexion pour fibres optiques ;

- une seconde unité de raccordement analogue à la première ;

- un second ensemble de cordons de sortie analogue au premier ensemble de cordons d'entrée.

2- Unité de réparation pour système de transmission selon revendication 1 dans laquelle ladite longueur de câble à fibres optiques est terminée par deux têtes de câbles montées en usine incorporant l'unité de raccordement et terminée par un ensemble de cordons.

3- Unité de réparation pour système de transmission selon revendication 1 dans laquelle ladite longueur de câble à fibres optiques est terminée à chaque extrémité par un ensemble d'organes de conversion opto-électronique et un connecteur multibroche et comporte en outre deux unités de raccordement terminées à l'un de leur accès par un connecteur multibroche associé et à l'autre par un ensemble de cordons.

13

4- Procédé de réparation d'un câble consistant à connecter une unité de réparation selon revendication 1 entre les sorties des deux stations d'amplification qui encadrent le défaut de transmission.

5- Unité de réparation selon revendication 3 dans laquelle l'unité de raccordement est montée dans un support se substituant au couvercle d'une cuve contenant les amplificateurs de la station.

6- Unité de réparation selon revendication 3 dans laquelle l'unité de raccordement est montée dans un support se substituant au couvercle de la boite contenant les amplificateurs de la station.

0015806

Fig.1

# Fig 2 A

**4**

**2**

**1**

**3**

**5**

**10**

**8**

# Fig 2 B

**4**

**1b**

**2**

**1a**

**3**

**5**

**12**

**11**

**8**

0015806

0015806

FIG.3

0015806

FIG.5A

FIG.5B

FIG.5C

0015806

## FIG. 6A

## FIG. 6B

**Office européen
des brevets**

**RAPPORT DE RECHERCHE EUROPEENNE**

0015806

Numéro de la demande

EP 80 40 0236

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 2 080 893 (NIPPON SELFOC) <br><br> * Page 3, lignes 1-28,39,40; page 4, lignes 1-7; page 5, lignes 14-27; page 7, lignes 11-16 * <br><br> -- | 1-4 | H 02 G  1/00 <br> G 02 B  5/16 |
| | ELECTRONICS, vol. 49, no. 18, 2 septembre 1976, New York US SCHMID: "Fiber-optic data transmission: a practical, low-cost technology", pages 94-99. <br><br> * Page 94, colonne de gauche, alinéa 4; colonne de droite, alinéas 1,4; page 95, colonne de gauche, alinéas 1,9; colonne de droite, alinéas 2,3; page 96, colonne de gauche, alinéa 1; page 97, colonne de gauche, alinéas 2-4; figures 1-3 * <br><br> -- | 1-4 | |
| | | | DOMAINES TECHNIQUES RECHERCHES (Int. Cl. 3) <br><br> H 02 G  1/00 <br>      1/14 <br>      1/16 <br>      9/00 <br>      9/10 <br> G 02 B  5/16 <br>      5/14 |
| | IEEE TRANSACTIONS ON COMMUNICATIONS vol. COM-26, no. 7, juillet 1978, New York US OLSZEWSKI et al. :" Development and installation of an optical-fiber cable for communications", pages 991-998. <br><br> * Page 991, colonne de gauche, alinéas 1-3; page 993, colonne de droite, alinéa 5 * <br><br> ---- | 1 | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-04-1980 | TIELEMANS |

OEB Form 1503.1  06.78